# EUROPÄISCHE PATENTSCHRIFT

(11) **EP 1 689 605 B1**
(45) Veröffentlichungstag und Bekanntmachung des Hinweises auf die Patenterteilung: **21.03.2007**
(21) Anmeldenummer: 04798150.1
(22) Anmeldetag: 03.11.2004
(51) Int. Cl.: B60K 15/077, F02M 37/10

(54) **VORRICHTUNG ZUR HALTERUNG EINER KRAFTSTOFFPUMPE IN EINEM KRAFTSTOFFBEH LTER**
DEVICE FOR RETAINING A FUEL PUMP IN A FUEL CONTAINER
DISPOSITIF DE FIXATION D'UNE POMPE A CARBURANT DANS UN RESERVOIR A CARBURANT

(30) Priorität: 01.12.2003 DE 10356061
(43) Veröffentlichungstag der Anmeldung: 16.08.2006
(73) Patentinhaber: SIEMENS AKTIENGESELLSCHAFT, 80333 München (DE)
(72) Erfinder: KADLER, Matthias, 64521 Gross-Gerau (DE); HAGIST, Dieter, 56112 Lahnstein (DE)
(86) Internationale Anmeldenummer: PCT/EP2004/052779
(87) Internationale Veröffentlichungsnummer: WO 2005/053987

(56) Entgegenhaltungen:
- EP-A- 0 558 110
- EP-A- 0 773 362
- DE-A1- 4 336 574

## Beschreibung

Die Erfindung betrifft eine Vorrichtung zur Halterung einer Kraftstoffpumpe in einem Kraftstoffbehälter eines Kraftfahrzeuges mit einem Pumpenhalter, mit zur Abstützung an einem feststehenden Bauteil, insbesondere einem Schwalltopf, vorgesehenen ersten Haltemitteln und mit zur Abstützung der Kraftstoffpumpe vorgesehenen zweiten Haltemitteln des Pumpenhalters und mit einer die ersten und die zweiten Haltemittel miteinander verbindenden Dämpfungseinrichtung, wobei die Haltemittel aus Kunststoff gefertigt sind.

Eine starre Halterung der Kraftstoffpumpe in dem Schwalltopf wird bei heutigen Kraftfahrzeugen vermieden, um beim Betrieb der Kraftstoffpumpe entstehende Geräusche nicht auf angrenzende Bauteile zu übertragen. Hierfür sind aus der Praxis Gummielemente bekannt geworden, welche zwischen den ersten Haltemitteln und den zweiten Haltemitteln angeordnet werden. Die aus Kunststoff gefertigten Haltemittel haben die Aufgabe, den Pumpenhalter mit der Kraftstoffpumpe und mit dem Schwalltopf fest zu verbinden. Die beim Betrieb der Kraftstoffpumpe entstehenden Geräusche werden daher ausschließlich von den Gummielementen gedämpft.

Nachteilig bei der bekannten Vorrichtung ist, dass die Gummielemente sehr kostenintensiv zu fertigen und zu montieren sind.

Aus der EP 0 773 362 (beinhaltet die Merkmale des Oberbegriffs des unabhängigen Anspruchs) ist eine Aufhängung einer Pumpe mit einer ersten und einer zweiten Haltevorrichtung bekannt. Beide Haltevorrichtungen sind über eine Dämpfungsvorrichtung miteinander verbunden. Die Dämpfungsvorrichtung besteht aus einer Vielzahl von Schenkeln, wobei jeder Schenkel aus zwei vertikalen Armen und einem radialen Arm besteht. Da die Kraftumlenkung im Wesentlichen nur in vertikaler Richtung erfolgt, sind relativ viele Schenkel für eine ausreichende Dämpfung notwendig.

Der Erfindung liegt das Problem zugrunde, die Vorrichtung der eingangs genannten Art so zu gestalten, dass sie möglichst kostengünstig aufgebaut ist.

Dieses Problem wird erfindungsgemäß dadurch gelöst, dass die ersten Haltemittel, die zweiten Haltemittel und die Dämpfungseinrichtung einstückig gefertigt sind.

Durch diese Gestaltung ist der Pumpenhalter der erfindungsgemäßen Vorrichtung einstückig gefertigt. Damit entfällt eine aufwändige und kostenintensive Montage des Pumpenhalters. Weiterhin lässt sich der Pumpenhalter in einem einzigen Arbeitsgang fertigen, was zu einer weiteren Verringerung der Fertigungskosten der erfindungsgemäßen Vorrichtung führt.

Die Dämpfungseinrichtung gestaltet sich gemäß der Erfindung konstruktiv besonders einfach, wenn die Dämpfungseinrichtung voneinander abgewinkelte Arme aufweist und wenn bei einer Bewegung der Kraftstoffpumpe die Arme auf Torsion und/oder Biegung belastet sind. Durch diese Gestaltung ist die Kraftstoffpumpe in einem kardanischen Gerüst aufgehängt. Diese Aufhängung erlaubt sehr hohe Freiheitsgrade für die Bewegungen der Kraftstoffpumpe in jede Richtung. Die Bewegungen der Pumpe werden von den voneinander abgewinkelten Armen gedämpft und damit von den an dem Schwalltopf oder dem Kraftstoffbehälter selbst anzuordnenden Haltemitteln ferngehalten.

Zur weiteren Vereinfachung der Dämpfungseinrichtung trägt es gemäß der Erfindung bei, wenn die Dämpfungseinrichtung zumindest einen ersten vertikalen Arm und zumindest einen von dem ersten vertikalen Arm abgewinkelten ersten horizontalen Arm hat.

Der Pumpenhalter hat gemäß der Erfindung eine hohe Stabilität, wenn der erste und/oder der zweite horizontale Arm als Ringelement ausgebildet ist.

Die Übertragung von starken Vibrationen der Kraftstoffpumpe auf angrenzende Bauteile lässt sich gemäß einer vorteilhaften Weiterbildung der Erfindung besonders gering halten, wenn zwischen dem ersten horizontalen Arm und einem mit den zweiten Haltemitteln verbundenen zweiten horizontalen Arm ein zweiter vertikaler Arm angeordnet ist.

Die Verbindung des Pumpenhalters mit angrenzenden Bauteilen erfordert gemäß einer anderen vorteilhaften Weiterbildung der Erfindung einen besonders geringen baulichen Aufwand, wenn die ersten Haltemittel radial an der Innenseite des Schwalltopfes abstützend und axial aufliegend ausgebildet sind.

Zur weiteren Erhöhung der Stabilität des Pumpenhalters trägt es gemäß einer anderen vorteilhaften Weiterbildung der Erfindung bei, wenn die zweiten Haltemittel ein die Kraftstoffpumpe umschließendes Rohrstück aufweisen.

Die Verbindung des Pumpenhalters mit der Kraftstoffpumpe erfordert gemäß einer anderen vorteilhaften Weiterbildung der Erfindung einen besonders geringen baulichen Aufwand, wenn die zweiten Haltemittel an dem Rohrstück angeordnete Rasthaken zur Halterung der Kraftstoffpumpe aufweisen.

Der Pumpenhalter vermag Geräusche und Vibrationen zuverlässig zu dämpfen, jedoch gemäß einer anderen vorteilhaften Weiterbildung der Erfindung starke Bewegungen der Kraftstoffpumpe zuverlässig aufzufangen, wenn der erste vertikale Arm einen radial nach innen weisenden Haken aufweist und wenn der Haken die vertikale Bewegung der zweiten Haltemittel begrenzt.

Bei starken Erschütterungen wird die Kraftstoffpumpe gemäß einer anderen vorteilhaften Weiterbildung der Erfindung zuverlässig in ihrer vorgesehenen Lage gehalten, wenn ein mit den ersten Haltemitteln verbundenes Ringelement ein radial nach innen weisendes, dem Rohrstück mit einem vorgesehenen Abstand gegenüberstehendes Stützelement aufweist. Durch dieses Stützelement wird die radiale Bewegung der Kraftstoffpumpe begrenzt.

Zur weiteren Verringerung der Fertigungskosten der erfindungsgemäßen Vorrichtung trägt es bei, wenn das einstückige Bauteil aus ersten und zweiten Haltemitteln und der Dämpfungseinrichtung aus Kunststoff im Spritzgussverfahren gefertigt ist.

Die Abdichtung der Kraftstoffpumpe gegenüber dem Schwalltopf erfordert gemäß einer anderen vorteilhaften Weiterbildung der Erfindung einen besonders geringen baulichen Aufwand, wenn die Kraftstoffpumpe ein ringförmiges, gummielastisches Dichtungselement zur ringförmigen Abdichtung einer im Bodenbereich des Schwalltopfes angeordneten Öffnung aufweist.

Eine Übertragung von Geräuschen der Kraftstoffpumpe über das Dichtungselement lässt sich gemäß einer anderen vorteilhaften Weiterbildung der Erfindung einfach vermeiden, wenn das Dichtungselement eine schräg abgewinkelte Dichtlippe aufweist und wenn das freie Ende der Dichtlippe auf dem Boden des Schwalltopfes aufliegt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: eine in einem Kraftstoffbehälter mit einer erfindungsgemäßen Vorrichtung gehaltenen Kraftstoffpumpe,
- Figur 2: eine Seitenansicht eines Pumpenhalters der erfindungsgemäßen Vorrichtung aus Figur 1,
- Figur 3: eine perspektivische Darstellung des Pumpenhalters aus Figur 2.

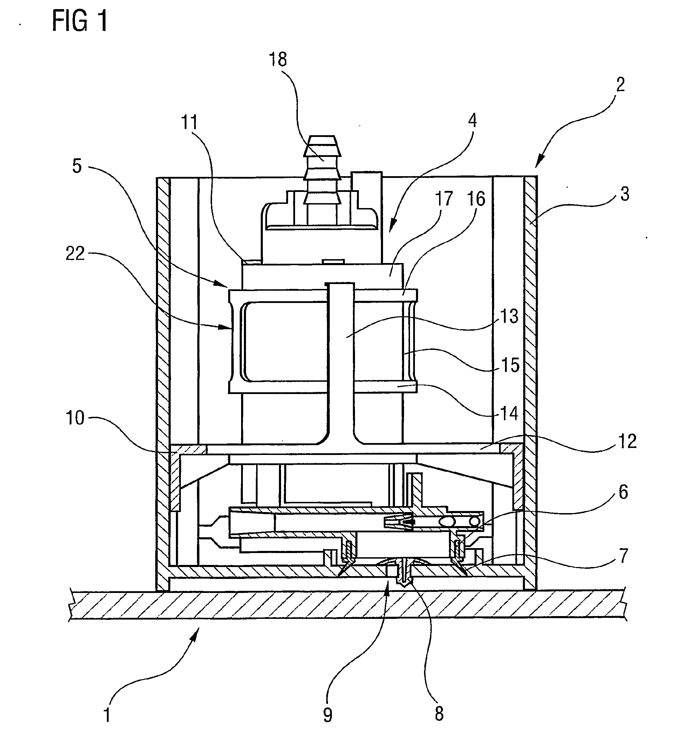

Figur 1 zeigt eine Schnittdarstellung durch eine in einem Kraftstoffbehälter 1 eines Kraftfahrzeuges angeordnete Fördereinheit 2 mit einer in einem Schwalltopf 3 angeordneten Kraftstoffpumpe 4. Die Kraftstoffpumpe 4 wird von einem an dem Schwalltopf 3 abstützenden Pumpenhalter 5 gehalten. Weiterhin weist die Kraftstoffpumpe 4 ein Dichtelement 6 auf, welches sich mit dem freien Ende einer Dichtlippe 7 am Boden des Schwalltopfes 3 im Bereich einer von einem Bodenventil 8 verschlossenen Öffnung 9 abstützt. Der Pumpenhalter 5 und das Dichtelement 6 bilden zusammen die Vorrichtung zur Halterung der Kraftstoffpumpe 4 in dem Schwalltopf 3. Der Pumpenhalter 5 hat erste, sich an dem Schwalltopf 3 abstützende Haltemittel 10 und zweite, die Kraftstoffpumpe 4 halternde Haltemittel 11. Die Haltemittel 10, 11 sind einstückig mit einer Dämpfungseinrichtung 22 gefertigt. Die ersten Haltemittel 10 sind untereinander über ein Ringelement 12 und mit einem ersten vertikalen Arm 13 verbunden. An dem ersten vertikalen Arm 13 schließt sich ein als Ringelement ausgebildeter horizontaler Arm 14 an. Der erste horizontale Arm 14 ist über einen zweiten vertikalen Arm 15 mit einem zweiten horizontalen Arm 16 verbunden. Der zweite horizontale Arm 16 ist mit einem die Kraftstoffpumpe 4 umschließenden Rohrstück 17 verbunden. Die voneinander abgewinkelten Arme 13-16 bilden die Dämpfungseinrichtung 22. Bei einer Bewegung der Kraftstoffpumpe 4 werden die Arme 13-16 auf Biegung und Torsion belastet und erzeugen damit eine elastische Halterung. Vibrationen der Kraftstoffpumpe 4 werden ebenfalls gedämpft. Die zweiten Haltemittel 11 sind an dem Rohrstück 17 angeordnet. Zur Vereinfachung der Zeichnung sind die ersten Haltemittel 10 in die Zeichenebene gedreht dargestellt. Tatsächlich sind jeweils drei erste Haltemittel 10 über den Umfang verteilt vorgesehen.

Die vertikalen und horizontalen Arme 13-16 bilden ein kardanisches Gerüst, welches vorgesehene Bewegungen der Kraftstoffpumpe 4 ermöglicht. Die Arme 13-16 werden bei einer Bewegung der Kraftstoffpumpe 4 auf Torsion und Biegung belastet.

Die Kraftstoffpumpe 4 saugt Kraftstoff aus dem Kraftstoffbehälter 1 über das Bodenventil 8 an und fördert diesen zu einem Anschlussstutzen 18. An dem Anschlussstutzen 18 lässt sich eine nicht dargestellte, zu einer Brennkraftmaschine des Kraftfahrzeuges führende Kraftstoffleitung anschließen.

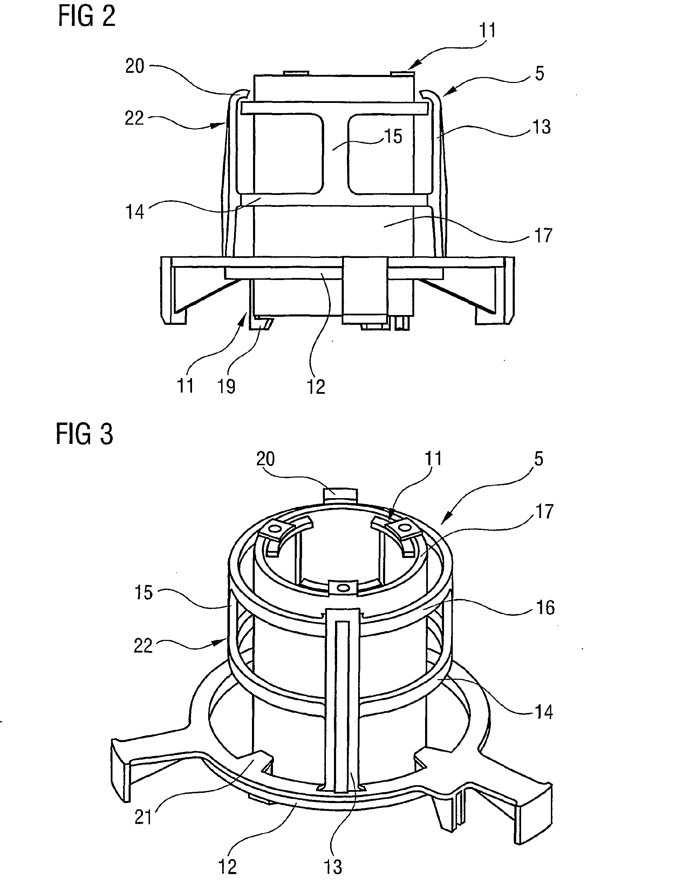

Figur 2 zeigt in einer Seitenansicht des Pumpenhalters 5 aus Figur 1, dass die zweiten Haltemittel 11 zur Halterung der Kraftstoffpumpe 4 an dem Rohrstück 17 angeordnete Rasthaken 19 aufweisen. Weiterhin sind an dem ersten vertikalen Arm 13 radial nach innen weisende Haken 20 angeordnet, welche die vertikale Bewegung des Rohrstücks 17 und damit die Bewegung der in Figur 1 dargestellten Kraftstoffpumpe 4 begrenzen.

Figur 3 zeigt in einer perspektivischen Darstellung des Pumpenhalters 5, dass das die ersten Haltemittel 10 verbindende Ringelement 12 radial nach innen weisende Stützelemente 21 hat. Die Stützelemente 21 haben einen Abstand zu dem Rohrstück 17 und begrenzen dessen Bewegungsfreiheit und damit die Bewegungsfreiheit der Kraftstoffpumpe 4 in radialer Richtung.

## Patentansprüche

1. Vorrichtung zur Halterung einer Kraftstoffpumpe in einem Kraftstoffbehälter eines Kraftfahrzeuges mit einem Pumpenhalter (5), mit zur Abstützung an einem feststehenden Bauteil, insbesondere einem Schwalltopf (3), vorgesehenen ersten Haltemitteln (10) und mit zur Abstützung der Kraftstoffpumpe vorgesehenen zweiten Haltemitteln (11) des Pumpenhalters und mit einer die ersten und die zweiten Haltemittel miteinander verbindenden Dämpfungseinrichtung (22), wobei die Haltemittel aus Kunststoff gefertigt sind, wobei die ersten Haltemittel (19), die zweiten Haltemittel (11) und die Dämpfungseinrichtung (22) einstückig gefertigt sind,
wobei die Dämpfungseinrichtung voneinander abgewinkelte Arme aufweist und bei einer Bewegung der Kraftstoffpumpe die Arme auf Torsion und/oder Biegung belastet sind, und wobei die Dämpfungseinrichtung (22) zumindest einen ersten vertikalen Arm (13) und zumindest einen von dem ersten vertikalen Arm (13) abgewinkelten ersten horizontalen Arm (14) hat **dadurch gekennzeichnet, dass** der erste horizontale Arm (14, 16) als Ringelement (12) ausgebildet ist.

2. Vorrichtung nach Anspruch 1, **dadurch gekennzeichnet, dass** zwischen dem ersten horizontalen Arm (14) und einem mit den zweiten Haltemitteln (11) verbundenen zweiten horizontalen Arm (16) ein zweiter vertikaler Arm (15) angeordnet ist.

3. Vorrichtung nach zumindest einem der vorhergehenden Ansprüche, **dadurch gekennzeichnet,**
**dass** die ersten Haltemittel (10) radial an der Innenseite des Schwalltopfes (3) abstützend und axial aufliegend ausgebildet sind.

4. Vorrichtung nach zumindest einem der vorhergehenden Ansprüche, **dadurch gekennzeichnet,**
**dass** die zweiten Haltemittel (11) ein die Kraftstoffpumpe (4) umschließendes Rohrstück (17) aufweisen.

5. Vorrichtung nach zumindest einem der vorhergehenden Ansprüche, **dadurch gekennzeichnet,**
**dass** die zweiten Haltemittel (11) an dem Rohrstück (17) angeordnete Rasthaken (19) zur Halterung der Kraftstoffpumpe (4) aufweisen.

6. Vorrichtung nach zumindest einem der vorhergehenden Ansprüche, **dadurch gekennzeichnet,**
**dass** der erste vertikale Arm (13) einen radial nach innen weisenden Haken (20) aufweist und dass der Haken (20) die vertikale Bewegung der zweiten Haltemittel (11) begrenzt.

7. Vorrichtung nach zumindest einem der vorhergehenden Ansprüche, **dadurch gekennzeichnet,**
**dass** ein mit den ersten Haltemitteln (10) verbundenes Ringelement (12) ein radial nach innen weisendes, dem Rohrstück (17) mit einem vorgesehenen Abstand gegenüberstehendes Stützelement (21) aufweist.

8. Vorrichtung nach zumindest einem der vorhergehenden Ansprüche, **dadurch gekennzeichnet,**
**dass** das einstückige Bauteil aus ersten und zweiten Haltemitteln (10, 11) und der Dämpfungseinrichtung aus Kunststoff im Spritzgussverfahren gefertigt ist.

9. Vorrichtung nach zumindest einem der vorhergehenden Ansprüche, **dadurch gekennzeichnet,**
**dass** die Kraftstoffpumpe (4) ein ringförmiges, gummielastisches Dichtungselement (6) zur ringförmigen Abdichtung einer im Bodenbereich des Schwalltopfes (3) angeordneten Öffnung (9) aufweist.

10. Vorrichtung nach zumindest einem der vorhergehenden Ansprüche, **dadurch gekennzeichnet,**
**dass** das Dichtungselement (6) eine schräg abgewinkelte Dichtlippe (7) aufweist und dass das freie Ende der Dichtlippe (7) auf dem Boden des Schwalltopfes (3) aufliegt.

## Claims

1. Device for retaining a fuel pump in a fuel container of a motor vehicle, with a pump holder (5), with first retaining means (10) of the pump holder, provided for supporting on a fixed component, in particular a baffle pot (3), and with second retaining means (11) of the pump holder, provided for supporting the fuel pump, and with a damping device (22) connecting the first and the second retaining means to one another, the retaining means being manufactured from plastic, the first retaining means (10), the second retaining means (11) and the damping device (22) being manufactured as a single piece, the damping device having arms (2) which are angled away from each other, and in that during a movement of the fuel pump (2) the arms being subject to a torsional and/or bending load and the damping device (22) having at least one first vertical arm (13) and at least one first horizontal arm (14) angled away from the first vertical arm (13) **characterized in that** the first horizontal arm (14, 16) is designed as an annular element (12).

2. Device according to claim 1, **characterized in that** a second vertical arm (15) is arranged between the first horizontal arm (14) and a second horizontal arm (16), which is connected to the second retaining means (11).

3. Device according to at least one of the preceding claims, **characterized in that** the first retaining means (10) are designed such that they are supported radially on the inside of the baffle pot (3) and such that they rest axially.

4. Device according to at least one of the preceding claims, **characterized in that** the second retaining means (11) have a pipe length (17) surrounding the fuel pump (4).

5. Device according to least one of the preceding claims, **characterized in that** the second retaining means (11) have latching hooks (19), arranged on the pipe length (17), for retaining the fuel pump (4).

6. Device according to at least one of the preceding claims, **characterized in that** the first vertical arm (13) has a radially inwardly pointing hook (20), and **in that** the hook (20) limits the vertical movement of the second retaining means (11) .

7. Device according to at least one of the preceding claims, **characterized in that** an annular element (12) connected to the first retaining means (10) has a radially inwardly pointing supporting element (21) situated opposite the pipe length (17) at a designated distance.

8. Device according to at least one of the preceding claims, **characterized in that** the single-piece component comprising first and second retaining means (10, 11) and the damping device is manufactured from plastic by injection molding.

9. Device according to at least one of the preceding claims, **characterized in that** the fuel pump (4) has an annular, elastomeric sealing element (6) for the annular sealing of an opening (9) arranged in the bottom region of the baffle pot (3).

10. Device according to at least one of the preceding claims, **characterized in that** the sealing element (6) has an obliquely angled sealing lip (7), and **in that** the free end of the sealing lip (7) rests on the bottom of the baffle pot (3).

## Revendications

1. Dispositif de fixation de pompe à carburant dans un réservoir à carburant d'un véhicule automobile, comportant un support de pompe (5), des premiers moyens de fixation (10) prévus pour s'appuyer sur une pièce fixe, notamment sur un pot d'accumulation (2), et des deuxièmes moyens de fixation (11) du support de pompe prévus pour supporter la pompe à carburant et un dispositif amortisseur (22) liant les uns aux autres les premiers et les deuxièmes moyens de fixation, les moyens de fixation étant fabriqués en matière plastique, les premiers moyens de fixation (10), les deuxièmes moyens de fixation (11) et le dispositif amortisseur (22) étant fabriqués ensemble en formant une pièce unique, le dispositif amortisseur comportant des bras coudés l'un par rapport à l'autre et soumis, lors d'un mouvement de la pompe à carburant, à une torsion et / ou à une flexion, et le dispositif amortisseur (22) ayant au moins un premier bras vertical (13) et au moins un premier bras horizontal (14) coudé par rapport au premier bras vertical (13), **caractérisé par le fait que** le premier bras horizontal (14, 16) est conçu comme élément annulaire (12).

2. Dispositif selon la revendication 1, **caractérisé par le fait que,** entre le premier bras horizontal (14) et un deuxième bras horizontal (16) lié aux deuxièmes moyens de fixation (11), est placé un deuxième bras vertical (15).

3. Dispositif selon au moins l'une des revendications précédentes, **caractérisé par le fait que** les premiers moyens de fixation (10) sont conçus pour s'appuyer dans le sens radial sur la face intérieure du pot d'accumulation (3) et être appliqués dans le sens axial.

4. Dispositif selon au moins l'une des revendications précédentes, **caractérisé par le fait que** les deuxièmes moyens de fixation (11) comportent un morceau de tube (17) entourant la pompe à carburant (4).

5. Dispositif selon au moins l'une des revendications précédentes, **caractérisé par le fait que** les deuxièmes moyens de fixation (11) comportent, pour la fixation de la pompe à carburant (4), des crochets d'arrêt (19) disposés sur le morceau de tube (17).

6. Dispositif selon au moins l'une des revendications précédentes, **caractérisé par le fait que** le premier bras vertical (13) comporte un crochet (20) orienté dans le sens radial vers l'intérieur et que le crochet (20) limite le mouvement vertical des deuxièmes moyens de fixation (11) .

7. Dispositif selon au moins l'une des revendications précédentes, **caractérisé par le fait qu**'un élément annulaire (12) lié aux premiers moyens de fixation (10) comporte un élément d'appui (21) orienté dans le sens radial vers l'intérieur et faisant, à une distance prévue, face au morceau de tube (17).

8. Dispositif selon au moins l'une des revendications précédentes, **caractérisé par le fait que** la pièce unique comprenant les premiers et les deuxièmes moyens de fixation (10, 11) et le dispositif amortisseur est fabriquée en matière plastique avec un procédé de moulage par injection.

9. Dispositif selon au moins l'une des revendications précédentes, **caractérisé par le fait que** la pompe à carburant (4) comporte un joint annulaire (6) élastique comme du caoutchouc pour assurer l'étanchéité annulaire d'une ouverture (9) placée dans la zone de fond du pot d'accumulation (3).

10. Dispositif selon au moins l'une des revendications précédentes, **caractérisé par le fait que** le joint (6) comporte une lèvre d'étanchéité (7) coudée en biais et que l'extrémité libre de la lèvre d'étanchéité (7) est appliquée sur le fond du pot d'accumulation (3).
